# EUROPEAN PATENT SPECIFICATION

(11) **EP 3 009 030 B1**
(45) Date of publication and mention of the grant of the patent: **17.02.2021**
(21) Application number: 15190157.6
(22) Date of filing: 16.10.2015
(51) Int. Cl.: A46B 7/06, A46B 9/02, A46B 9/04, A46D 1/04, A61C 17/22, A46D 3/04

(54) **TOOTHBRUSH HEAD WITH A PORTION OF BRISTLES DISPOSED IN AN OUTWARD LEANING ANGLE**
ZAHNBÜRSTENKOPF MIT EINEM TEIL VON BORSTENBÜNDELN IN EINEM NACH AUSSEN GENEIGTEN WINKEL
TÊTE DE BROSSE À DENTS AVEC UNE PARTIE À POILS DISPOSÉS SELON UN ANGLE INCLINÉ VERS L'EXTÉRIEUR

(30) Priority: 17.10.2014 US 201414516595
(43) Date of publication of application: 20.04.2016
(73) Proprietor: Inbound Finland Oy, 00510 Helsinki (FI)
(72) Inventor: VARILA, Reijo, 00170 Helsinki (FI)
(74) Representative: Laine IP Oy

(56) References cited:
- US-A- 5 464 275
- US-A1- 2013 326 833

## Description

### TECHNICAL FIELD

The present invention generally relates to replacement brush heads, for example for use with an electromagnetic assembly. The invention in particular relates to a toothbrush head with a portion of bristles disposed in an outward leaning angle. Additionally, methods of manufacture of the same are described herein.

### BACKGROUND

Plaque is the cause to gingivitis and other gum diseases. It is a sticky material made of bacteria, mucus, and food debris and deposits particularly in the gingival crevice and periodontal pockets evolved between the gum and teeth. Being concealed, technical level, conventional tooth brushes with right-angle bristles block rather than remove it when brushing the teeth. What is needed is a brush which is designed to remove plaque buildup at the neck of the tooth and the area between the teeth.

The document US 2013/0326833 A1 describes a replacement brush head for an electromagnetic driven toothbrush and a method of manufacturing such a brush head. The brush head includes a bristle carrier, where the bristle carrier has blind-end holes in which a plurality of tooth cleaning bristles can be fixedly attached. The bristles are arranged in inwardly centered rows, one behind the other. Bristles in outer rows are arranged in groups on both sides of the bristle carrier. Bristle groups are arranged with an outward leaning angle for efficient cleaning of the tooth neck area and gum pockets. Bristles in the inner rows can be shorter than the ones in the outer rows. Document US 5464275 A further discloses an end brush and a method of making the brush using the automatic distribution and insertion of the bristle fill material into the cup of a cup-shape shank holder. A centered drive stem projects from the bottom of the holder. After a measured amount of the fill material is inserted through fill tubes and a guide funnel, a centering core insert is forced into the center of the cup to distribute the fill material around and against the interior wall of the cup. The material is cut to proper length and in the same or a separate station the exterior wall of the cup of the holder is deformed or crimped inwardly girdling the core securing and centering the core and material in the holder. Axial ribs are also formed which improves transfer of heat from the holder improving tool life. Preferably the insert is softer than the fill material and may also be softer than the holder. A wide variety of fill materials may be employed as well as various shapes of inserts and holders. The insert and holder may be piloted together during the assembly operation. The end brush is easier to make, has longer life, and has inherently better balance making the tool easier to use by hand or machine.

### SUMMARY

It is an object of certain embodiments of the present invention to provide a toothbrush head, in particular, a toothbrush head for use as a replaceable toothbrush head of an electric toothbrush system. It is further an object of certain embodiments of the present invention to provide a toothbrush head, wherein the brushing efficiency of the teeth neck areas, periodontal pockets and/or gums can be improved. Another object of certain embodiments of the present invention is to provide a toothbrush head, wherein bristles are arranged and orientated to improve holding and/or handling the toothbrush system during penetration of the interdental area. Additionally, it is an object of certain embodiment of the present invention to provide a method for manufacturing a toothbrush head.

It is an aspect of the present invention to provide a toothbrush head comprising a brush head housing coupled to a brush head shaft, a movable bristle carrier coupled to a pivoting axle of the brush head housing, and a mechanical linkage assembly coupled to the pivoting axle.

These and other objects are achieved by the embodiments of the present invention, as hereinafter described and claimed.

The invention is defined by the features of the independent claims. Some specific embodiments are defined in the dependent claims.

According to a first aspect of the present invention, there is provided a toothbrush head, comprising a brush head housing, and a bristle carrier movable relative to the brush head housing around an axis of pivoting, the bristle carrier containing a plurality of tooth cleaning elements, wherein a first portion of bristles is arranged annularly and disposed in an outward leaning angle compared to the axis of pivoting by means of a wedge ring, and a second portion of bristles is arranged radially inwards of the first portion of bristles.

The wedge ring comprises a conically curved surface area.

In an embodiment, the wedge ring is arranged between the first portion of bristles and the second portion of bristles. The conically curved surface area is configured to bend the bristles of the first portion of bristles such that an outward leaning angle of the bristles of the first portion of bristles decreases radially outwards of the wedge ring. The conically curved surface area is located at an outer lateral area of the wedge ring.

In another embodiment, the wedge ring is arranged radially outwards of the first portion of bristles. The conically curved surface area is configured to bend the bristles of the first portion of bristles such that an outward leaning angle of the bristles of the first portion of bristles increases radially inwards of the wedge ring. The conically curved surface area is located at an inner lateral area of the wedge ring.

In an embodiment, the wedge ring is an integral part of the bristle carrier. In another embodiment, the wedge ring is fixedly attached on a surface of the bristle carrier.

According to an embodiment, the second portion of the bristles is arranged radially inwards of the wedge ring. According to another embodiment, the first portion of the bristles and the second portion of the bristles are arranged radially inwards of the wedge ring.

According to an embodiment, the bristles of the first portion of bristles are longer than the bristles of the second portion of bristles.

In an embodiment, the wedge ring is configured to bend the first portion of bristles into an outward leaning angle in the range between 1° and 45°, preferably in the range between 10° and 20°.

According to a second aspect of the invention, the object of the embodiments can be also achieved by a method for manufacturing a toothbrush head, the method comprising the steps of:
- attaching a first portion of bristles to a bristle carrier such that the first portion of bristles is orientated essentially parallel to an axis of pivoting, and attaching a second portion of bristles to the bristle carrier such that the second portion of bristles is orientated essentially parallel to an axis of pivoting and arranged radially inwards of the first portion of bristles,
- taking a wedge ring, and
- attaching the wedge ring to the bristle carrier such that the first portion of bristles is bent radially outwards by means of the wedge ring.

In an embodiment, the wedge ring is glued or otherwise fixedly attached to the bristle carrier.

In another embodiment, the position of the wedge ring relative to the bristle carrier is adjusted by a mechanical gripper or a Bernoulli gripper.

According to an embodiment, the position of the wedge ring relative to the bristle carrier is measured with a measurement system. According to another embodiment, the position of the wedge ring relative to the bristle carrier is classified as "OK" or "not OK" according to defined tolerance values by means of computer implemented instructions stored on a computer readable medium.

There is provided a method for manufacturing a toothbrush head, the method comprising:
- attaching a first portion of bristles to a bristle carrier such that the first portion of bristles is orientated in an outward leaning angle to an axis of pivoting, and attaching a second portion of bristles to the bristle carrier such that the second portion of bristles is orientated essentially parallel to the axis of pivoting and arranged radially inwards of the first portion of bristles,
- taking a wedge ring,
- attaching the wedge ring to the bristle carrier such that the first portion of bristles is bent radially inwards by means of the wedge ring.

The object of the embodiments can be also achieved by a toothbrush head, comprising a brush head housing, a bristle carrier movable relative to the brush head housing around an axis of pivoting, the bristle carrier comprising a conically curved surface area configured to bend a first portion of bristles radially outwards, a bristle carrier ring including the first portion of bristles and configured to be attached to the bristle carrier such that the first portion of bristles is bent radially outwards by means of the conically curved surface area, and a second portion of bristles arranged radially inwards of the first portion of bristles.

In an embodiment, the first portion of bristles is attached annularly to the bristle carrier ring.

The bristle carrier comprises a wedge ring which includes the conically curved surface area. The wedge ring may be an integral part of the bristle carrier or fixedly attached to the bristle carrier.

According to an embodiment, the second portion of bristles is arranged radially inwards of the wedge ring.

According to another embodiment, the bristle carrier comprises an adjuster configured to adjust a position of the bristle carrier ring relative to the bristle carrier. In an embodiment, the bristle carrier comprises an adjuster configured to adjust an outward leaning angle of the bristles of the first portion of bristles and a length difference between the first and second portion of bristles.

Considerable advantages are obtained by means of the embodiments of the present invention. A toothbrush head for use as a replaceable toothbrush head of an electric toothbrush system is provided by means of the embodiments. Further, a toothbrush head is provided, wherein the brushing efficiency of the gingival crevice and teeth neck areas, periodontal pockets and/or gums is improved. Furthermore, a toothbrush head is provided, wherein bristle tufts are arranged and orientated to improve penetration of the interdental areas. Additionally, a toothbrush head is provided, wherein bristle tufts are arranged and orientated to improve holding and/or handling the toothbrush system during penetration of the interdental gum crevice.

There is also provided a method for manufacturing a toothbrush head. The manufacturing method is simple and allows high design flexibility. Bristles can be simultaneously or step-wise attached to the bristle carrier essentially perpendicular to the surface of the bristle carrier. Existing bristle setting equipment for setting the bristles can be therefore used. Attaching inclined bristles to the bristle carrier in order to obtain a toothbrush head with a portion of bristles disposed in an outward leaning angle is not required. By attaching the wedge ring to the bristle carrier the respective portion of bristles is simultaneously bent radially outwards into the predetermined position. The manufacturing method reduces manufacturing time and costs.

According to certain advantageous embodiments of the present invention, all bristles are fixed on a bristle carrier. The first portion of bristles is arranged annularly in the outermost row(s) and the second portion of the bristles is arranged radially inwards of the first portion of bristles. A separate wedge ring is pressed and fixed in position in-between the first portion of bristles and the second portion of bristle after setting the bristles. The bristles of the first portion of bristles are bent radially outwards to defined angle(s) by means of the wedge ring. Since the outward leaning angles of the bristles of the first portion of bristles decrease in a direction radially outwards, a relatively sharp peripheral tip of the bristles is formed. This relatively sharp peripheral tip especially improves the brushing efficiency of the gingival crevice and teeth neck areas, periodontal pockets and/or gums. According to certain embodiments, the same effect of receiving a peripheral tip can also be achieved by arrangement of the wedge ring radially outwards of the first portion of bristles. In this case, the conically curved surface area is located at the inner lateral area of the wedge ring in order to bend the bristles of the first portion of bristles such that an outward leaning angle of the bristles of the first portion of bristles in relation to the axis of pivoting increases radially inwards of the wedge ring.

According to certain other advantageous embodiments of the present invention, the first portion of bristles is attached to a separate bristle carrier ring and the second portion of bristles is attached to the bristle carrier. The bristle carrier is provided with a wedge ring. The bristles of the first portion of bristles are bent radially outwards to defined angle(s) by means of the wedge ring at the stage of joining the bristle carrier ring and the bristle carrier. Since the outward leaning angles of the bristles of the first portion of bristles decrease in a direction radially outwards, a relatively sharp peripheral tip of the bristles is formed. This relatively sharp peripheral tip especially improves the brushing efficiency of the gingival crevice and teeth neck areas, periodontal pockets and/or gums. According to certain embodiments an additional adjuster is provided. In this case, the bristle length difference between the bristles of the first portion of bristles and the bristles of the second portion of bristles as well as the outward leaning angles of the bristles of the first portion of bristles can be adjusted by the user.

### BRIEF DESCRIPTION OF THE DRAWINGS:

For a more complete understanding of particular embodiments of the present invention and their advantages, reference is now made to the following descriptions, taken in conjunction with the accompanying drawings. In the drawings:
**Fig. 1** illustrates a schematic perspective view of a toothbrush head according to an embodiment of the present invention,
**Fig. 2** illustrates a schematic view of a bristle carrier according to an embodiment of the present invention,
**Fig. 3** illustrates a schematic perspective view of a bristle carrier according to an embodiment of the present invention during a manufacturing process before attachment of a wedge ring,
**Fig. 4** illustrates a schematic perspective view of a bristle carrier according to an embodiment of the present invention after attachment of a wedge ring,
**Fig. 5** illustrates a schematic side view of a toothbrush head according to an embodiment of the present invention during manufacturing,
**Fig. 6** illustrates a schematic cross-sectional view of a bristle carrier ring of a toothbrush head according to an embodiment of the present invention,
**Fig. 7** illustrates a schematic cross-sectional view of a bristle carrier ring of a toothbrush head according to an embodiment of the present invention, wherein the first portion of bristles is bent radially outwards by means of a wedge ring,
**Fig. 8** illustrates a schematic cross-sectional view of a bristle carrier ring mounted to a bristle carrier of a toothbrush head according to an embodiment of the present invention,
**Fig. 9a** illustrates a schematic perspective view of a bristle carrier of a toothbrush head according to an embodiment of the present invention,
**Fig. 9b** illustrates a schematic perspective view of a bristle carrier of a toothbrush head according to an embodiment of the present invention,
**Fig. 9c** illustrates a schematic perspective view of a bristle carrier of a toothbrush head according to an embodiment of the present invention,
**Fig. 10** illustrates a schematic perspective view of a toothbrush head according to an embodiment of the present invention during manufacturing,
**Fig. 11** illustrates a schematic perspective view of a bristle carrier ring mounted to a bristle carrier of a toothbrush head according to an embodiment of the present invention,
**Fig. 12a** illustrates a schematic perspective view of a toothbrush head according to an embodiment of the present invention,
**Fig. 12b** illustrates a schematic perspective view of a toothbrush head according to an embodiment of the present invention,
**Fig. 13a** illustrates a schematic cross sectional view of a toothbrush head according to an embodiment of the present invention,
**Fig. 13b** illustrates a schematic perspective view of a toothbrush head according to the embodiment shown in Fig. 13a,
**Fig. 14a** illustrates a schematic cross sectional view of a toothbrush head according to an embodiment of the present invention,
**Fig. 14b** illustrates a schematic perspective view of a toothbrush head according to the embodiment shown in Fig. 14a,
**Fig. 15** illustrates a flow chart diagram of a method for manufacturing a toothbrush head according to certain embodiments of the present invention,
**Fig. 16** illustrates a schematic perspective view of a toothbrush head without a wedge ring according to certain embodiments of the present invention,
**Fig. 17** illustrates a schematic perspective view of a toothbrush head during attachment of a wedge ring according to certain embodiments of the present invention, and
**Fig. 18** illustrates a schematic perspective view of a toothbrush head including a wedge ring according to certain embodiments of the present invention.

### DETAILED DESCRIPTION OF EMBODIMENTS OF THE INVENTION:

The present invention generally relates to a replacement toothbrush head for electric toothbrushes. According to certain embodiments, the toothbrush head may comprise, or consist of, some or all of the following elements: a driving electromagnet assembled in a toothbrush head 1, a brush head shaft 3, a brush head housing 2 comprising a bottom portion with a pivoting axle 18 in the center and a movable bristle carrier 4 for carrying tooth cleaning bristles, a moveable bristle carrier 4 connected and/or coupled to the central pivoting axle, a brush head bottom member fixedly connected to and/or coupled to a brush head shaft 3 and said brush head shaft 3 fixedly connected and/or coupled to said brush head housing 2, a brush head shaft 3 including a mechanical linkage assembly 6, a mechanical linkage assembly 6 connected to the movable bristle carrier 4 and an electromagnetic drive such that the bristle carrier 4 can pivot around a brush head pivoting axis 5 when the electromagnet is actuated.

The bristle carrier 4 can have blind-end bores in which a plurality of tooth cleaning bristles or other tooth cleaning elements can be fixedly attached. A first portion of bristles 7 and a second portion of bristles 8 are fixedly attached in the respective blind-end bores. The bristles and/or other tooth cleaning elements of the first portion of bristles 7 can be arranged into bristle tufts and the bristles and/or other tooth cleaning elements of the second portion of bristles 8 can be arranged into bristle tufts. Each of the bristle tufts contains a plurality of the bristles or other tooth cleaning elements. The bristles or other tooth cleaning elements are attached to the bristle carrier for example either by using a metal plate anchor as known per se, by the same plastic material used for injection molding of the bristle carrier or by any other method known by the art.

The bristle carrier 4 is configured to pivot around an axis of pivoting 5. The pivoting angle is typically in the range between +90° and -90°, normally in the range between +45° and -45°, for example in the range between +20° and -20° from stationary rest position. According to certain other embodiments, the bristle carrier 4 is configured to rotate around an axis of rotation.

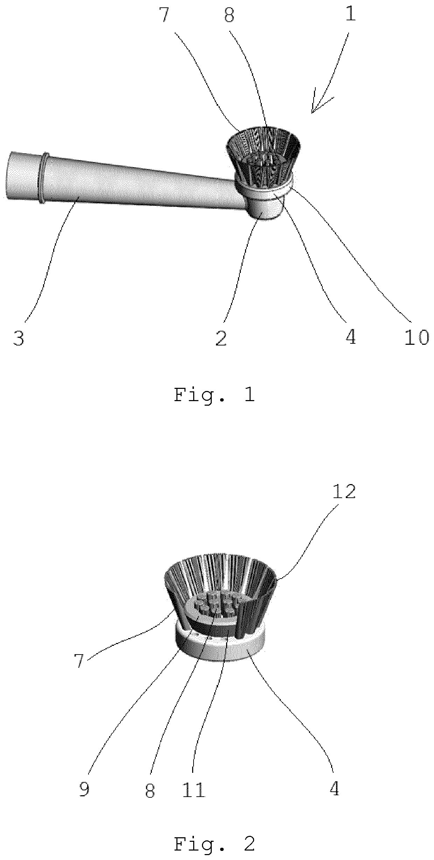

In **Fig. 1** a schematic perspective view of a toothbrush head 1 according to an embodiment of the present invention is illustrated. The toothbrush head 1 comprises a brush head housing 2, a brush head shaft 3 and a moveable bristle carrier 4. The moveable bristle carrier 4 has an outer contour 10 which is shown as a circle. The outer contour 10 of the bristle carrier may also be, for example, elliptical or any other desired symmetric or asymmetric shape according to certain embodiments. The brush head housing 2 may be an integral portion of the brush head shaft or separately connected to the brush head shaft in a manufacturing process.

A first portion of bristles 7 is arranged annularly and disposed in an outward leaning angle compared to an axis of pivoting 5, which axis is not shown in Fig. 1, and a second portion of bristles 8 is arranged radially inwards of the first portion of bristles 7. The outward leaning angle is typically in the range between 45° and 1 °, normally in the range between 30° and 1 °, preferably in the range between 25° and 15°, for example 18°. The outward leaning angle of the bristles of the first portion of bristles can vary so that some of the bristles have a more pronounced outward leaning angle than others. The second portion of bristles 8 is orientated essentially perpendicular to a surface of the bristle carrier 4. In other words, the bristles of the second portion of bristles 8 are arranged essentially parallel to the axis of pivoting 5. The bristles of the first portion of bristles 7 form a plurality of respective bristle tufts. Also the bristles of the second portion of bristles 8 form a plurality of respective bristle tufts. The bristles of the first portion of bristles 7 are longer than the bristles of the second portion of bristles 8. The length difference 20 between the tips of the bristles of the first portion of bristles 7 and the tips of the bristles of the second portion of bristles 8 is typically in the range between 0 % and 60 % of the length of the bristles of the second portion of bristles 8, preferably in the range between 10 % and 50 % of the length of the bristles of the second portion of bristles 8, for example 45 % of the length of the bristles of the second portion of bristles 8. The bristles of the first portion of bristles 7 can be longer than the bristles of the second portion of bristles 8, preferably at least 1.2x longer, even more preferably between 1.5x and 2.0x longer than the bristles of the second portion of bristles 8.

In **Fig. 2** a schematic view of a bristle carrier 4 according to an embodiment of the present invention is illustrated. Some of the bristles of the first portion of bristles 7 are not shown in Fig. 2 in order to clearly illustrate a wedge ring 9. The wedge ring 9 is fixedly attached on the surface of the bristle carrier. According to certain embodiments, the wedge ring 9 may be also an integral part of the bristle carrier 4. Typically the wedge ring 9 is made of the same material as the bristle carrier 4. A first portion of bristles 7 is further arranged annularly and disposed in an outward leaning angle compared to the axis of pivoting 5, which is not shown in Fig. 2, by means of the wedge ring 9. The outward leaning angle is typically in the range between 0° and 45°, preferably between 5° and 40°, for example 25°. A second portion of bristles 8 is arranged radially inwards of the first portion of bristles 7. The second portion of the bristles 8 is further arranged radially inwards of the wedge ring 9. The wedge ring 9 comprises a conically curved surface area 11. According to certain other embodiments, the wedge ring 9 comprises a cross section in the form of a triangle, square or circle or any other geometrical shape by means of which the bristles of the first portion of bristles 7 can be bent radially outwards.

According to a certain embodiment, the conically curved surface area 11 of the wedge ring 9 is configured to bend the bristles of the first portion of bristles 7 such that the outward leaning angle of the bristles of the first portion of bristles 7 decreases radially outwards of the wedge ring 9. In other words, the outward leaning angle of the bristles of the first portion of bristles which are directly in contact with the conically curved surface area 11 of the wedge ring 9 is greater than the outward leaning angle of the bristles of the first portion of bristles which are arranged in the outermost row. Therefore, the first portion of bristles 7 forms an annular peripheral tip 12 above the bristle carrier 4 which tip 12 can be considered to be relatively sharp. The peripheral tip 12 advantageously improves the brushing efficiency of the gingival crevice, teeth neck areas and evolving periodontal pockets and/or gums.

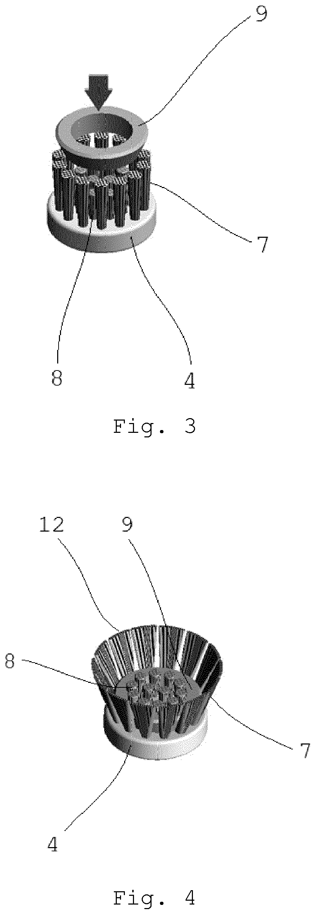

In **Fig. 3** a schematic perspective view of a bristle carrier according to an embodiment of the present invention during a manufacturing process before attachment of a wedge ring is illustrated. The first portion of bristles 7 is fixedly attached in blind-end bores of a bristle carrier 4 in such a way that the first portion of bristles 7 is orientated essentially parallel to an axis of pivoting 5, which is not shown in Fig. 3. Also a second portion of bristles 8, which is arranged radially inwards of the first portion of bristles 7, is fixedly attached in blind-end bores of the bristle carrier 4 in such a way that the second portion of bristles 8 is orientated essentially parallel to the axis of pivoting 5. Then, taking of a wedge ring 9 takes place, for example, by means of a mechanical gripper or a Bernoulli gripper and the wedge ring 9 is moved relative to the bristle carrier. At a later stage, which is not shown in Fig. 3, the wedge ring 9 is fixedly attached to the bristle carrier 4 such that the first portion of bristles 7 is bent radially outwards by means of the wedge ring 9.

In **Fig. 4** a schematic perspective view of a bristle carrier 4 according to an embodiment of the present invention after attachment of a wedge ring 9 on the surface of the bristle carrier 4 is illustrated. The wedge ring 9 deforms the bristles of the first portion of bristles 7 into a predetermined orientation. The bristles of the second portion of bristles 8 remain essentially in their orientation.

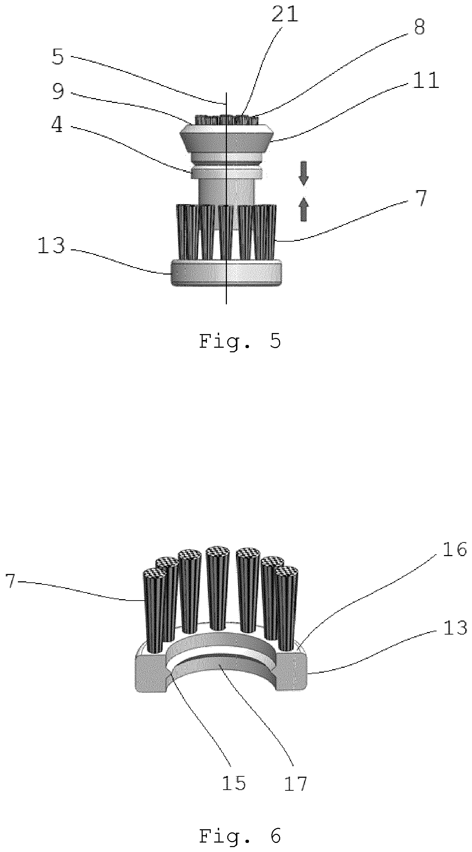

In **Fig. 5** a schematic side view of a toothbrush head 1 according to an embodiment of the present invention during manufacturing is illustrated. The toothbrush head 1 comprises a brush head housing 2, which is not shown in Fig. 5, and a bristle carrier 4 movable relative to the brush head housing 2 around an axis of pivoting 5. The bristle carrier 4 comprises a conically curved surface area 11 configured to bend a first portion of bristles 7 radially outwards. The toothbrush head 1 further comprises a bristle carrier ring 13 including the first portion of bristles 7 and configured to be attached to the bristle carrier 4 such that the first portion of bristles 7 is bent radially outwards by means of the conically curved surface area 11. A second portion of bristles 8 is arranged radially inwards of the first portion of bristles 7. The bristles of the first portion of bristles 7 and the bristles of the second portion of bristles 8 are orientated essentially parallel to the axis of pivoting 5. The top surface 21 formed by the bristles of the second portion of bristles 8 may be conical according to certain embodiments in order to face to tooth curvature sufficiently. The first portion of bristles 7 is arranged annularly in blind-end bores of the bristle carrier ring 13 and the second portion of bristles 8 is arranged in blind-end bores of the bristle carrier 4. In Fig. 5 the bristle carrier 4 and the bristle carrier ring 13 are shown separated from each other. During manufacturing of the toothbrush head the bristle carrier 4 and the bristle carrier ring 13 are moved relative to each other in order to attach the separate bristle carrier ring 13 to the bristle carrier 4. The bristle carrier 4 comprises a wedge ring 9 which includes the conically curved surface area 11. The wedge ring 11 may be an integral part of the bristle carrier 4 or may be a separate part which is fixedly attached to the bristle carrier 4. Typically the wedge ring 9 is made in an injection molding process step together with the bristle carrier 4. The second portion of bristles 8 is arranged radially inwards of the wedge ring 11.

In **Fig. 6** a schematic cross-sectional view of a separate bristle carrier ring 13 of a toothbrush head 1 according to an embodiment of the present invention is illustrated. The first portion of bristles 7 is arranged annularly in blind-end bores of the bristle carrier ring 13. The bristles of the first portion of bristles 7 form bristle tufts and are arranged essentially perpendicular to the mounting surface 16 of the bristle carrier ring 13. The bristle carrier ring 13 further comprises a tongue 15 on the inner surface area 17 of the bristle carrier ring 13, which tongue is configured to be attached to a groove 14 of a bristle carrier 4.

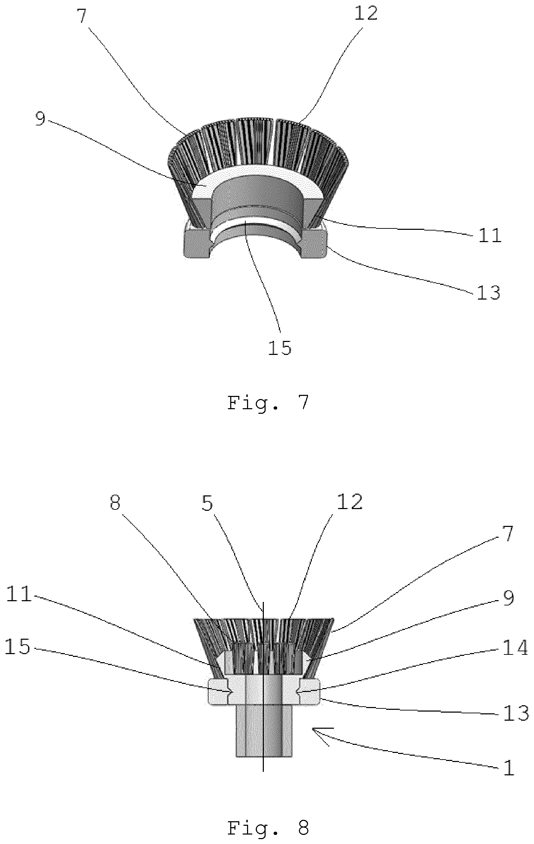

In **Fig. 7** a schematic cross-sectional view of a bristle carrier ring 13 of a toothbrush head 1 according to an embodiment of the present invention is illustrated, wherein the first portion of bristles 7 is bent radially outwards by means of a wedge ring 13. The wedge ring 13 bends the bristles of the first portion of bristles 7 radially outwards. The conically curved surface area 11 of the wedge ring 13 is configured to bend the bristles of the first portion of bristles 7 such that the outward leaning angle of the bristles of the first portion of bristles 7 decreases radially outwards of the wedge ring 13. In other words, the cross sectional area of the bristle tufts of the first portion of bristles 7 changes along the length of the bristle tufts. A thinned sharp ended shape of the tips of the bristle tufts of the first portion of bristles 7 is created. The bristle tufts of the first portion of bristles 7 form a relatively sharp peripheral tip 12 which can be advantageously used for brushing the teeth neck areas, gingival crevice and evolved periodontal pockets, for instance. The relatively sharp peripheral tip 12 also enables cleaning the interdental areas. Additionally the stiffness of the peripheral tip 12 is increased which improves lifetime of the bristles of the first portion of bristles 7.

In **Fig. 8** a schematic cross-sectional view of a bristle carrier ring 13 mounted to a bristle carrier 4 of a toothbrush head 1 according to an embodiment of the present invention is illustrated. The separate bristle carrier ring 13 is pressed into its final position such that the position of the tongue 15 coincides with the position of the groove 14 of the bristle carrier 4. The wedge ring 13 of the bristle carrier 4 comprises a conically curved surface area 11 configured to bend the first portion of bristles 7 radially outwards. The second portion of bristles 8 is arranged radially inwards of the wedge ring 13.

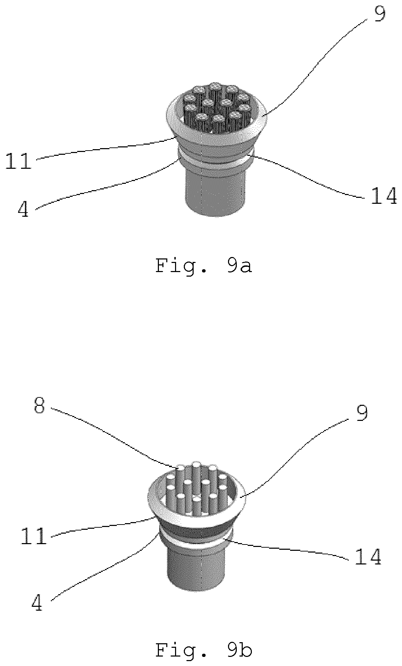

In **Fig. 9a** a schematic perspective view of a bristle carrier 4 of a toothbrush head 1 according to an embodiment of the present invention is illustrated. Ordinary filament type bristles form the bristle tufts of the second portion of bristles 8 radially inwards of the wedge ring 9. The bristles of the second portion of bristles 8 typically have a round cross-sectional shape.

In **Fig. 9b** a schematic perspective view of a bristle carrier 4 of a toothbrush head 1 according to an embodiment of the present invention is illustrated. Tooth cleaning elements 8 having an annular cross-sectional area are arranged radially inwards of the wedge ring 9.

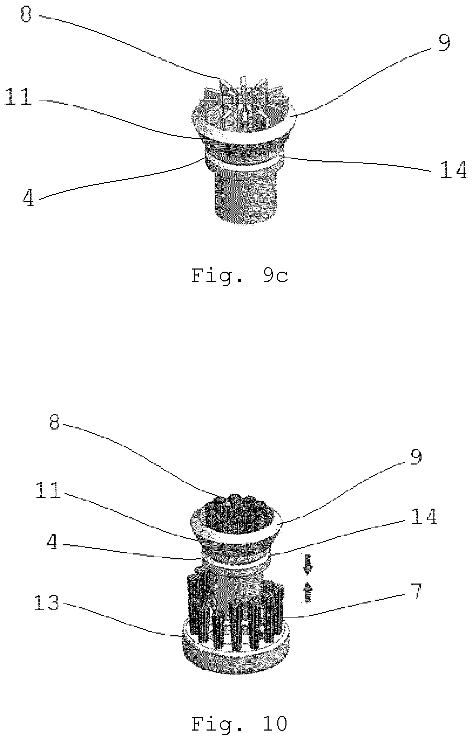

In **Fig. 9c** a schematic perspective view of a bristle carrier 4 of a toothbrush head 1 according to an embodiment of the present invention is illustrated. Tooth cleaning elements 8 having a rectangular cross-sectional area are arranged radially inwards of the wedge ring 9.

In **Fig. 10** a schematic perspective view of a toothbrush head 1 according to an embodiment of the present invention during manufacturing is illustrated. The bristles of the first portion of bristles 7 attached to the bristle carrier ring 13 form bristle tufts of different length. The bristles are attached to the bristle carrier ring 13 perpendicular to the mounting surface 16 regardless of size. Bristles of the second portion of bristles 8 attached to the bristle carrier 4 may have the same length or different lengths.

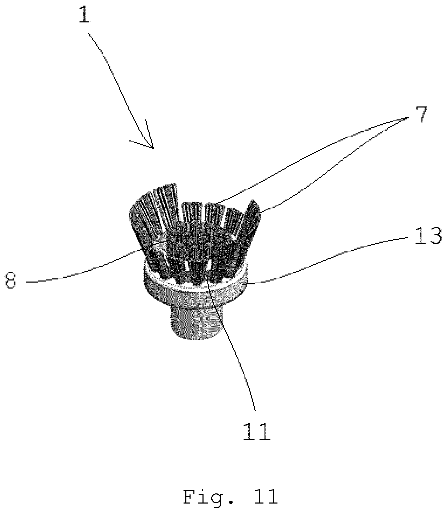

In **Fig. 11** a schematic perspective view of a bristle carrier ring 13 mounted to a bristle carrier 4 of a toothbrush head 1 according to an embodiment of the present invention is illustrated. The separate bristle carrier ring 13 is pressed into its final position such that bristle tufts of different length are bent radially outwards. The bristles of the first portion of bristles 7 are bent radially outwards by means of the conically curved surface area 11 of the wedge ring 9 regardless of the length of the bristles.

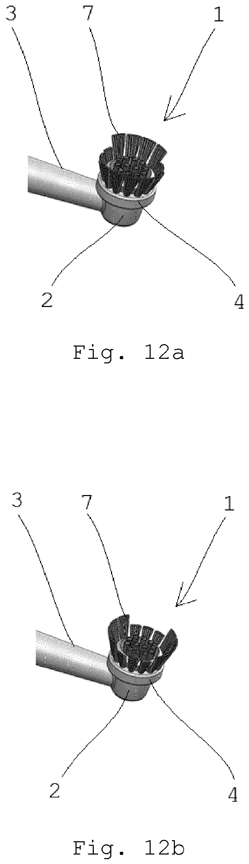

In **Fig. 12a** a schematic perspective view of a toothbrush head 1 according to an embodiment of the invention is illustrated. The bristles of the first portion of bristles 7 are bent radially outwards by means of the conically curved surface area 11 of the wedge ring 9 regardless of the length of the bristles. The longer bristle tufts of the first portion of bristles 7 form two groups located on opposite sides of the longitudinal axis of the brush head shaft 3.

In **Fig. 12b** a schematic perspective view of a toothbrush head according to an embodiment of the invention is illustrated. The bristles of the first portion of bristles 7 are bent radially outwards by means of the conically curved surface area 11 of the wedge ring 9 regardless of the length of the bristles. The longer bristle tufts of the first portion of bristles 7 form two groups extending over the longitudinal axis of the brush head shaft 3.

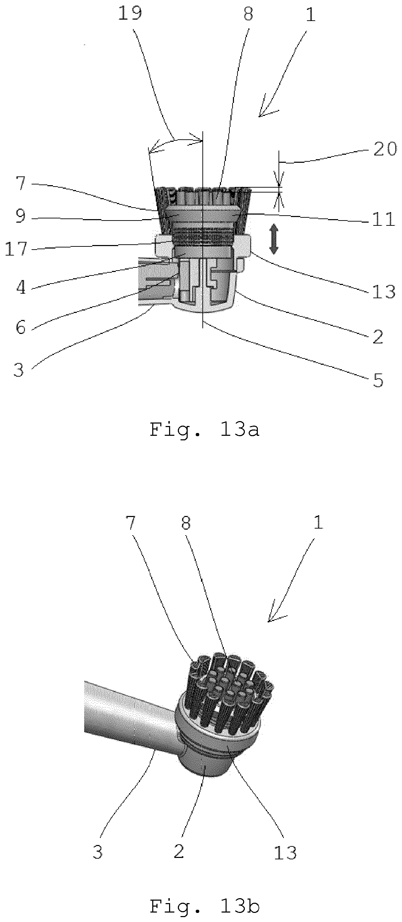

In **Fig. 13a** a schematic cross sectional view of a toothbrush head 1 according to an embodiment of the invention is illustrated. The toothbrush head 1 comprises a brush head housing 2 and a bristle carrier 4 movable relative to the brush head housing 2 around an axis of pivoting 5. The bristle carrier 4 comprises a wedge ring 9 with a conically curved surface area 11 configured to bend a first portion of bristles 7 radially outwards. A bristle carrier ring 13 includes the first portion of bristles 7 and is attached to the bristle carrier 4. The first portion of bristles 7 is arranged annularly in blind-end bores of the bristle carrier ring 13. The bristle carrier 4 further comprises an adjuster 17 configured to adjust the position of the bristle carrier ring 13 relative to the bristle carrier 4 and to likewise adjust the outward leaning angle 19 of the bristles of the first portion of bristles 7. By means of the adjuster 17 it is possible to adjust the bristle length difference 20 between the bristles of the first portion of bristles 7 and the bristles of the second portion of bristles 8. The bristles of the second portion of bristles 8 are arranged radially inwards of the first portion of bristles 7 and the wedge ring 9.

In **Fig. 13b** a schematic perspective view of a toothbrush head according to the embodiment shown in Fig. 13a is illustrated.

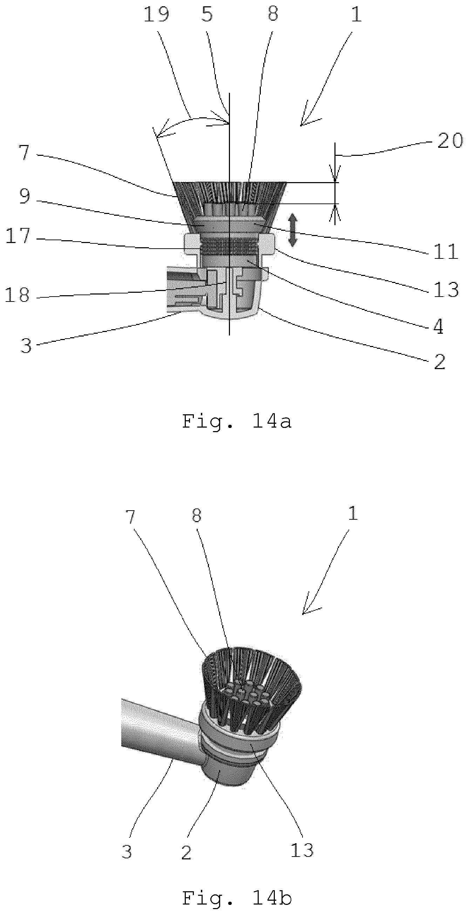

In **Fig. 14a** a schematic cross sectional view of a toothbrush head according to an embodiment of the invention is illustrated. The toothbrush head 1 comprises a brush head housing 2 and a bristle carrier 4 movable relative to the brush head housing 2 around an axis of pivoting 5. The bristle carrier 4 comprises a wedge ring 9 with a conically curved surface area 11 configured to bend a first portion of bristles 7 radially outwards. A bristle carrier ring 13 includes the first portion of bristles 7 and is attached to the bristle carrier 4. The first portion of bristles 7 is arranged annularly in blind-end bores of the bristle carrier ring 13. The bristle carrier 4 further comprises an adjuster 17 configured to adjust the position of the bristle carrier ring 13 relative to the bristle carrier 4 and to adjust the outward leaning angle 19 of the bristles of the first portion of bristles 7. Compared to the embodiment shown in Fig. 13a the bristle length difference 20 and likewise the outward leaning angle 19 of the bristles of the first portion of bristles 7 are increased. I.e., by means of the adjuster 17 it is also possible to adjust the outward leaning angle 19 of the bristles of the first portion of bristles 7.

In **Fig. 14b** a schematic perspective view of a toothbrush head according to the embodiment shown in Fig. 14a is illustrated.

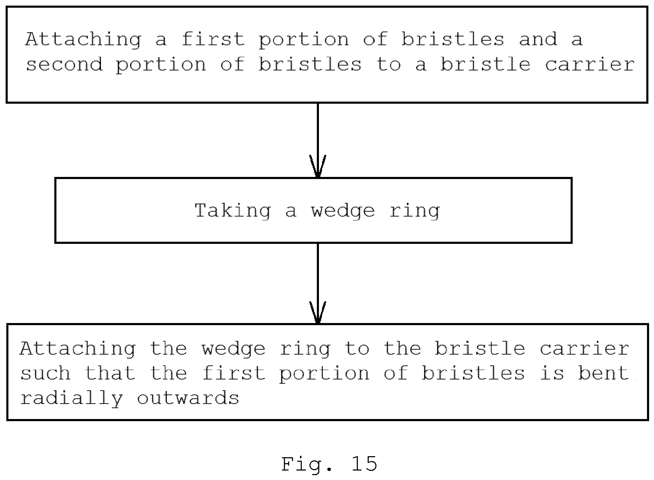

In **Fig. 15** a flow chart diagram of a method for manufacturing a toothbrush head according to certain embodiments of the present invention is illustrated. A first portion of bristles is attached to a bristle carrier such that the first portion of bristles is orientated essentially parallel to an axis of pivoting and a second portion of bristles is attached to the bristle carrier such that the second portion of bristles is orientated essentially parallel to an axis of pivoting and arranged radially inwards of the first portion of bristles. Then taking of a wedge ring takes place, for example, by means of a mechanical gripper or a Bernoulli gripper and the wedge ring is moved relative to the bristle carrier. At a later stage the wedge ring 9 is fixedly attached to the bristle carrier such that the first portion of bristles is bent radially outwards by means of the wedge ring. The wedge ring may be fixedly attached to the bristle carrier by gluing or may be otherwise attached.

According to certain embodiments, the position of the wedge ring relative to the bristle carrier may be measured with a measurement system during the attachment of the wedge ring and/or after the attachment of the wedge ring. The position of the wedge ring may then be classified as "OK" or "not OK" according to defined tolerance values by means of computer implemented instructions stored on a computer readable medium.

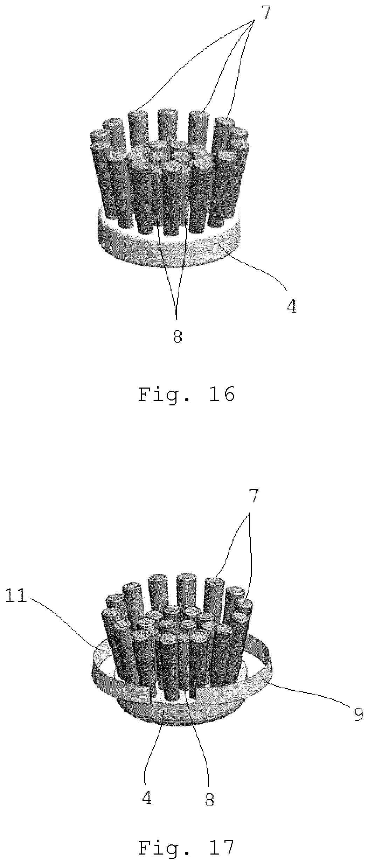

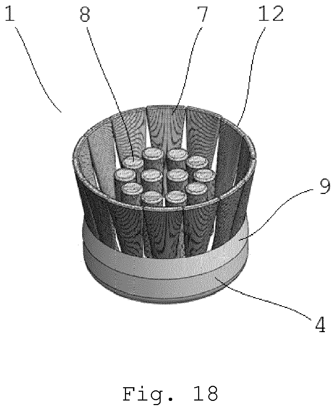

In **Fig. 16** a schematic perspective view of a toothbrush head without a wedge ring according to certain embodiments of the present invention is illustrated. During manufacturing a first portion of bristles 7 is attached to a bristle carrier 4 such that the first portion of bristles 7 is orientated in an outward leaning angle to an axis of pivoting 5. Additionally, a second portion of bristles 8 is attached to the bristle carrier 4 such that the second portion of bristles 8 is orientated essentially parallel to the axis of pivoting 5 and arranged radially inwards of the first portion of bristles 7. Further manufacturing steps of the embodiment are shown in Fig. 17 and Fig. 18.

In **Fig. 17** a schematic perspective view of a toothbrush head during attachment of a wedge ring according to certain embodiments of the present invention is illustrated. Taking of a wedge ring 9 takes place, e.g. by means of a gripper. The conically curved surface area 11 is located at an inner lateral area of the wedge ring 9. The first portion of the bristles 7 and the second portion of the bristles 8 are arranged radially inwards of the wedge ring 9

In **Fig. 18** a schematic perspective view of a toothbrush head including a wedge ring according to certain embodiments of the present invention is illustrated. Finally, the wedge ring 9 is attached to the bristle carrier 4 such that the first portion of bristles 7 is bent radially inwards by means of the conically curved surface area 11 of the wedge ring 9. The wedge ring 9 deforms the bristles of the first portion of bristles 7 into a predetermined orientation. Thus, the first portion of bristles 7 forms an annular peripheral tip 12 above the bristle carrier 4 which tip 12 can be considered to be relatively sharp. The peripheral tip 12 advantageously improves the brushing efficiency of the gingival crevice, teeth neck areas and evolving periodontal pockets and/or gums.

Although the present invention has been described in detail for the purpose of illustration, various changes and modifications can be made within the scope of the claims. In addition, it is to be understood that the present disclosure contemplates that, to the extent possible, one or more features of any embodiment may be combined with one or more features of any other embodiment.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. Where reference is made to a numerical value using a term such as, for example, about or substantially, the exact numerical value is also disclosed.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

Accordingly, it is not intended that the invention be limited, except as by the claims set forth below.

### List of reference numbers:

- 1: Toothbrush head
- 2: Brush head housing
- 3: Brush head shaft
- 4: Bristle carrier
- 5: Axis of pivoting
- 6: Mechanical linkage assembly
- 7: First portion of bristles
- 8: Second portion of bristles
- 9: Wedge ring
- 10: Outer contour of the bristle carrier
- 11: Conically curved surface area
- 12: Peripheral tip
- 13: Bristle carrier ring
- 14: Groove
- 15: Tongue
- 16: Mounting surface
- 17: Adjuster
- 18: Pivoting axle
- 19: Outward leaning angle
- 20: Bristle length difference
- 21: Top surface

## Claims

1. A toothbrush head (1), comprising;
- a brush head housing (2), and
- a bristle carrier (4) movable relative to the brush head housing (2) around an axis of pivoting (5), the bristle carrier (4) containing a plurality of tooth cleaning elements,
- the plurality of tooth cleaning elements comprising a first portion of bristles (7) and a second portion of bristles (8), wherein the second portion of bristles (8) is arranged radially inwards of the first portion of bristles (7),
**characterized in that**
- the first portion of bristles (7) is arranged annularly and disposed in an outward leaning angle (19) compared to the axis of pivoting (5) by means of a wedge ring (9), wherein the wedge ring (9) comprises a conically curved surface area (11) configured to bend the bristles of the first portion of bristles (7) such that an outward leaning angle (19) of the bristles of the first portion of bristles (7) decreases radially outwards of the wedge ring (9) or configured to bend the bristles of the first portion of bristles (7) such that an outward leaning angle (19) of the bristles of the first portion of bristles (7) increases radially inwards of the wedge ring (9).

2. The toothbrush head (1) according to claim 1, wherein the wedge ring (9) is arranged between the first portion of bristles (7) and the second portion of bristles (8) or the wedge ring (9) is arranged radially outwards of the first portion of bristles (7).

3. The toothbrush head (1) according to any of claim 1 or 2, wherein the wedge ring (9) is an integral part of the bristle carrier (4) or the wedge ring (9) is fixedly attached on a surface of the bristle carrier (4).

4. The toothbrush head (1) according to claim 1, wherein the second portion of the bristles (8) is arranged radially inwards of the wedge ring (9) or the first portion of the bristles (7) and the second portion of the bristles are arranged radially inwards of the wedge ring (9).

5. The toothbrush head (1) according to any of claims 1-4, wherein bristles of the first portion of bristles (7) are longer than bristles of the second portion of bristles (8).

6. The toothbrush head (1) according to any of claims 1-5, wherein the wedge ring (9) is configured to bend the first portion of bristles (7) into an outward leaning angle (19) in the range between 1° and 45°.

7. The toothbrush head (1) according to any of claims 1-6, wherein the first portion of bristles (7) is secured in position by means of the wedge ring (9).

8. The toothbrush head (1) according to claim 1, wherein the conically curved surface area (11) is located at an outer lateral area of the wedge ring (9) or the conically curved surface area (11) is located at an inner lateral area of the wedge ring (9).

9. The toothbrush head (1) according to any one of claims 1-8, wherein the bristle carrier (4) comprises an adjuster (17) configured to adjust an outward leaning angle (19) of the bristles of the first portion of bristles (7) and a length difference (20) between the first and second portion of bristles (7, 8).

10. A method for manufacturing a toothbrush head (1), the method comprising:
- attaching a first portion of bristles (7) to a bristle carrier (4) such that the first portion of bristles (7) is orientated essentially parallel to an axis of pivoting (5), and attaching a second portion of bristles (8) to the bristle carrier (4) such that the second portion of bristles (8) is orientated essentially parallel to the axis of pivoting (5) and arranged radially inwards of the first portion of bristles (7),
**characterized by**
- taking a wedge ring (9),
- attaching the wedge ring (9) to the bristle carrier (4) such that the first portion of bristles (7) is bent radially outwards by means of the wedge ring (9), wherein the wedge ring (9) comprises a conically curved surface area (11) configured to bend the bristles of the first portion of bristles (7) such that an outward leaning angle (19) of the bristles of the first portion of bristles (7) decreases radially outwards of the wedge ring (9).

11. The method according to claim 10, wherein the wedge ring (9) is glued to the bristle carrier (4).

12. The method according to claim 10 or 11, wherein a position of the wedge ring (9) relative to the bristle carrier (4) is adjusted by a mechanical gripper or a Bernoulli gripper.

13. The method according to any of claims 10-12, wherein a position of the wedge ring relative to the bristle carrier is measured with a measurement system.

14. The method according to any of claims 10-13, wherein a position of the wedge ring is classified as "OK" or "not OK" according to defined tolerance values by means of computer implemented instructions stored on a computer readable medium.

## Patentansprüche

1. Zahnbürstenkopf (1), umfassend:
- ein Bürstenkopfgehäuse (2) und
- einen Borstenträger (4), der in Bezug auf das Bürstenkopfgehäuse (2) um eine Drehachse (5) beweglich ist, wobei der Borstenträger (4) eine Vielzahl von Zahnreinigungselementen enthält,
- die Vielzahl von Zahnreinigungselementen, umfassend einen ersten Borstenteil (7) und einen zweiten Borstenteil (8), wobei der zweite Borstenteil (8) radial innerhalb des ersten Borstenteils (7) eingerichtet ist,
**dadurch gekennzeichnet, dass**
- der erste Borstenteil (7) mittels eines Keilrings (9) ringförmig eingerichtet ist und verglichen mit der Drehachse (5) in einem nach außen geneigten Winkel (19) angeordnet ist, wobei der Keilring (9) einen konisch gekrümmten Oberflächenbereich (11) umfasst, der konfiguriert ist, um die Borsten des ersten Borstenteils (7) so zu biegen, dass ein nach außen geneigter Winkel (19) der Borsten des ersten Borstenteils (7) radial außerhalb des Keilrings (9) abnimmt, oder konfiguriert ist, um die Borsten des ersten Borstenteils (7) so zu biegen, dass ein nach außen geneigter Winkel (19) der Borsten des ersten Borstenteils (7) radial innerhalb des Keilrings (9) zunimmt.

2. Zahnbürstenkopf (1) nach Anspruch 1, wobei der Keilring (9) zwischen dem ersten Borstenteil (7) und dem zweiten Borstenteil (8) eingerichtet ist oder der Keilring (9) radial außerhalb des ersten Borstenrings (7) eingerichtet ist.

3. Zahnbürstenkopf (1) nach einem von Anspruch 1 oder 2, wobei der Keilring (9) ein Bestandteil des Borstenträgers (4) ist oder der Keilring (9) fest auf einer Oberfläche des Borstenträgers (4) befestigt ist.

4. Zahnbürstenkopf (1) nach Anspruch 1, wobei der zweite Borstenteil (8) radial innerhalb des Keilrings (9) eingerichtet ist oder der erste Borstenteil (7) und der zweite Borstenteil radial innerhalb des Keilrings (9) eingerichtet sind.

5. Zahnbürstenkopf (1) nach einem der Ansprüche 1-4, wobei Borsten des ersten Borstenteils (7) länger sind als Borsten des zweiten Borstenteils (8).

6. Zahnbürstenkopf (1) nach einem der Ansprüche 1-5, wobei der Keilring (9) konfiguriert ist, um den ersten Borstenteil (7) in einen nach innen geneigten Winkel (19) im Bereich zwischen 1° und 45° zu biegen.

7. Zahnbürstenkopf (1) nach einem der Ansprüche 1-6, wobei der erste Borstenteil (7) mittels des Keilrings (9) in Position gehalten wird.

8. Zahnbürstenkopf (1) nach Anspruch 1, wobei der konisch gekrümmte Oberflächenbereich (11) an einem äußeren Seitenbereich des Keilrings (9) liegt oder der konisch gekrümmte Oberflächenbereich (11) an einem inneren Seitenbereich des Keilrings (9) liegt.

9. Zahnbürstenkopf (1) nach einem der Ansprüche 1-8, wobei der Borstenträger (4) einen Einsteller (17) umfasst, der konfiguriert ist, um einen nach außen geneigten Winkel (19) der Borsten des ersten Borstenteils (7) und einen Längenunterschied (20) zwischen dem ersten und zweiten Borstenteil (7, 8) einzustellen.

10. Verfahren zum Herstellen eines Zahnbürstenkopfs (1), wobei das Verfahren umfasst:
- Befestigen eines ersten Borstenteils (7) an einem Borstenträger (4), sodass der erste Borstenteil (7) im Wesentlichen parallel zu einer Drehachse (5) ausgerichtet ist, und Befestigen eines zweiten Borstenteils (8) an dem Borstenträger (4), sodass der zweite Borstenteil (8) im Wesentlichen parallel zu der Drehachse (5) ausgerichtet ist und radial innerhalb des ersten Borstenteils (7) eingerichtet ist,
**gekennzeichnet durch**
- Herannehmen eines Keilrings (9),
- Befestigen des Keilrings (9) an dem Borstenträger (7), sodass der erste Borstenteil (7) mittels des Keilsrings (9) radial nach außen gebogen ist, wobei der Keilring (9) einen konisch gekrümmten Oberflächenbereich (11) umfasst, der konfiguriert ist, um die Borsten des ersten Borstenteils (7) zu biegen, sodass ein nach außen geneigter Winkel (19) der Borsten des ersten Borstenteils (7) radial außerhalb des Keilrings (9) abnimmt.

11. Verfahren nach Anspruch 10, wobei der Keilring (9) an den Borstenträger (4) geklebt wird.

12. Verfahren nach Anspruch 10 oder 11, wobei eine Position des Keilrings (9) in Bezug auf den Borstenträger (4) durch einen mechanischen Greifer oder einen Bernoulli-Greifer eingestellt wird.

13. Verfahren nach einem der Ansprüche 10-12, wobei eine Position des Keilrings in Bezug auf den Borstenträger mit einem Messsystem gemessen wird.

14. Verfahren nach einem der Ansprüche 10-13, wobei eine Position des Keilrings gemäß definierten Toleranzwerten mittels computerimplementierter Anweisungen, die auf einem computerlesbaren Medium gespeichert sind, als "OK" oder "nicht OK" klassifiziert wird.

## Revendications

1. Tête de brosse à dents (1), comprenant ;
- un logement de tête de brosse (2), et
- un support de poils (4) mobile par rapport au logement de tête de brosse (2) autour d'un axe de pivotement (5), le support de poils (4) contenant une pluralité d'éléments de nettoyage des dents,
- la pluralité d'éléments de nettoyage des dents comprenant une première partie de poils (7) et une seconde partie de poils (8), dans laquelle la seconde partie de poils (8) est agencée radialement vers l'intérieur de la première partie de poils (7),
**caractérisée en ce que**
- la première partie de poils (7) est agencée de manière annulaire et disposée selon un angle d'inclinaison vers l'extérieur (19) par comparaison à l'axe de pivotement (5) au moyen d'une bague de calage (9), dans laquelle la bague de calage (9) comprend une aire de surface incurvée de manière conique (11) configurée pour plier les poils de la première partie de poils (7) de telle sorte qu'un angle d'inclinaison vers l'extérieur (19) des poils de la première partie de poils (7) diminue radialement vers l'extérieur de la bague de calage (9) ou configurée pour plier les poils de la première partie de poils (7) de telle sorte qu'un angle d'inclinaison vers l'extérieur (19) des poils de la première partie de poils (7) augmente radialement vers l'intérieur de la bague de calage (9).

2. Tête de brosse à dents (1) selon la revendication 1, dans laquelle la bague de calage (9) est agencée entre la première partie de poils (7) et la seconde partie de poils (8) ou la bague de calage (9) est agencée radialement vers l'extérieur de la première partie de poils (7).

3. Tête de brosse à dents (1) selon l'une quelconque des revendications 1 ou 2, dans laquelle la bague de calage (9) fait partie intégrante du support de poils (4) ou la bague de calage (9) est fixée de manière fixe sur une surface du support de poils (4).

4. Tête de brosse à dents (1) selon la revendication 1, dans laquelle la seconde partie de poils (8) est agencée radialement vers l'intérieur de la bague de calage (9) ou la première partie de poils (7) et la seconde partie de poils sont agencées radialement vers l'intérieur de la bague de calage (9).

5. Tête de brosse à dents (1) selon l'une quelconque des revendications 1-4, dans laquelle des poils de la première partie de poils (7) sont plus longs que des poils de la seconde partie de poils (8).

6. Tête de brosse à dents (1) selon l'une quelconque des revendications 1-5, dans laquelle la bague de calage (9) est configurée pour plier la première partie de poils (7) selon un angle d'inclinaison vers l'extérieur (19) dans la plage allant 1° à 45°.

7. Tête de brosse à dents (1) selon l'une quelconque des revendications 1-6, dans laquelle la première partie de poils (7) est fixée en position au moyen de la bague de calage (9).

8. Tête de brosse à dents (1) selon la revendication 1, dans laquelle l'aire de surface incurvée de manière conique (11) est située au niveau d'une aire latérale externe de la bague de calage (9) ou l'aire de surface incurvée de manière conique (11) est située au niveau d'une aire latérale intérieure de la bague de calage (9).

9. Tête de brosse à dents (1) selon l'une quelconque des revendications 1-8, dans laquelle le support de poils (4) comprend un dispositif d'ajustement (17) configuré pour ajuster un angle d'inclinaison vers l'extérieur (19) des poils de la première partie de poils (7) et une différence de longueur (20) entre la première et la seconde partie de poils (7, 8).

10. Procédé de fabrication d'une tête de brosse à dents (1), le procédé comprenant :
- fixer une première partie de poils (7) à un support de poils (4) de telle sorte que la première partie de poils (7) soit orientée sensiblement parallèlement à un axe de pivotement (5), et fixer une seconde partie de poils (8) au support de poils (4) de telle sorte que la seconde partie de poils (8) soit orientée sensiblement parallèlement à l'axe de pivotement (5) et agencée radialement vers l'intérieur de la première partie de poils (7),
**caractérisé par**
- prendre une bague de calage (9),
- fixer la bague de calage (9) au support de poils (4) de telle sorte que la première partie de poils (7) soit pliée radialement vers l'extérieur au moyen de la bague de calage (9), dans lequel la bague de calage (9) comprend une aire de surface incurvée de manière conique (11) configurée pour plier les poils de la première partie de poils (7) de telle sorte qu'un angle d'inclinaison vers l'extérieur (19) des poils de la première partie de poils (7) diminue radialement vers l'extérieur de la bague de calage (9).

11. Procédé selon la revendication 10, dans lequel la bague de calage (9) est collée au support de poils (4).

12. Procédé selon la revendication 10 ou 11, dans lequel une position de la bague de calage (9) par rapport au support de poils (4) est ajustée par une dispositif de préhension mécanique ou un dispositif de préhension Bernoulli.

13. Procédé selon l'une quelconque des revendications 10-12, dans lequel une position de la bague de calage par rapport au support de poils est mesurée à l'aide d'un système de mesure.

14. Procédé selon l'une quelconque des revendications 10-13, dans lequel une position de la bague de calage est classée comme « OK » ou « pas OK » selon des valeurs de tolérance définies au moyen d'instructions implémentées par ordinateur stockées sur un support lisible par ordinateur.
